# EUROPEAN PATENT APPLICATION

(11) **EP 4 523 936 A1**
(43) Date of publication of application: **19.03.2025**
(21) Application number: 24196121.8
(22) Date of filing: 23.08.2024
(51) Int. Cl.: B60J 10/79, B60R 13/04, B60J 1/17, B60J 5/04, B60J 10/76

(54) **OUTER TRIM PANEL, PROFILE ASSEMBLY, GLASS RUN SEAL, SEALING SYSTEM ASSEMBLY OF WINDOW GLASS, DOOR, AND VEHICLE**

(30) Priority: 04.09.2023 CN 202311142537
(71) Applicant: Hutchinson (Wuhan) Automotive Rubber Products Co., Ltd., Wuhan Hubei 430056 (CN)
(72) Inventor: WEN, Xiaojing, Wuhan, 430056 (CN); LAJOUX, Cyril, Wuhan, 430056 (CN); YOU, Fenghong, Wuhan, 430056 (CN)
(74) Representative: Gevers Patents

(57) **Abstract**

The application provides a glass run seal (100), the glass run seal (100) includes a sealing body (110) and a first sealing component (150), the first sealing component (150) is located at an end of the sealing body (110), and provided with a first sealing groove (120). The first sealing groove (120) is provided with at least two inner sealing walls (122), the two inner sealing walls (122) are arranged opposite to each other, and a distance between the two inner sealing walls (122) decreases in a direction from an opening of the first sealing groove (121) to interior of the first sealing groove (121). It is more convenient to mount the glass run seal (100). An outer trim panel (500), a sealing system assembly (10) of a window glass (20), a door (1) of a vehicle, and a vehicle are also provided.

## Description

### TECHNICAL FIELD

The application relates to the field of sealing of vehicles, and in particular to an outer trim panel, a profile assembly, a glass run seal, a sealing system assembly of a window glass, a door, and a vehicle.

### BACKGROUND

In order to control an opening degree of a window when a vehicle is moving, the window of the vehicle is provided with a window glass which is liftable, a glass run seal needs to be arranged between a window frame of the window and the window glass, and a gap between the window glass and a cover plate is sealed by a sealing lip of the glass run seal, while such sealing lip is easy to collapse, resulting in a poor sealing effect.

### SUMMARY

The application provides an outer trim panel, a profile assembly, a glass run seal, a sealing system assembly of a window glass, a door, and a vehicle, which are intended to solve a problem of how to reduce a possibility of collapse of a sealing lip and improve sealing reliability of the sealing lip.

According to a first aspect of the application, there is provided an outer trim panel, the outer trim panel is configured to abut against a glass run seal, the glass run seal is provided with an outer sealing lip and a first abutment structure, the outer trim panel is provided with a second abutment structure, and the second abutment structure is configured to abut against the first abutment structure, and configured to apply an acting force facing toward the outer sealing lip to the first abutment structure.

Further, the first abutment structure may be a first abutment groove formed by recessing a surface of the glass run seal, the second abutment structure is a first abutment boss protruded from a surface of the outer trim panel, and the first abutment boss abuts against an inner wall of the first abutment groove. Or, the first abutment structure may be a second abutment boss protruded from a surface of the glass run seal, the second abutment structure is a second abutment groove formed by recessing a surface of the outer trim panel facing toward the outer sealing lip, and the second abutment boss abuts against an inner wall of the second abutment groove.

Further, the outer trim panel may include a fixation component, a second abutment component, and a reinforcement component. The second abutment component is protruded from a surface of the fixation component, and a surface of the second abutment component facing toward the outer sealing lip is provided with the second abutment structure. A part of the reinforcement component is connected to the fixation component, and another part of the reinforcement component is connected to the second abutment component.

Further, the reinforcement component is located at another side of the second abutment component opposite to a side with the second abutment structure.

According to a second aspect of the application, there is provided a profile assembly, the profile assembly is configured to abut against a glass run seal, the glass run seal is provided with an outer sealing lip and a first abutment structure; the profile assembly is provided with a third abutment structure, and the third abutment structure is configured to abut against the first abutment structure, and configured to apply an acting force facing toward the outer sealing lip to the first abutment structure. An embodiment of the application provides a glass run seal, the glass run seal includes a sealing body, a first abutment component, and an outer sealing lip. The first abutment component is connected to the sealing body. The outer sealing lip is fixedly connected to an end of the first abutment component. The first abutment component is provided with a first abutment structure.

Further, the glass run seal may further include a first sealing component. The first sealing component is located at an end of the sealing body, and provided with a first sealing groove. The first sealing groove is provided with at least two inner sealing walls, the two inner sealing walls are arranged opposite to each other, and a distance between the two inner sealing walls decreases in a direction from an opening of the first sealing groove to interior of the first sealing groove.

Further, one of the inner sealing walls may be a planar surface, another of the inner sealing walls may be a curved surface, and the curved surface is protruded toward the planar surface. Further, each of the two inner sealing walls may be a planar surface, and the two inner sealing walls form a preset included angle there-between.

Further, the first sealing component may include a connection component, a protrusion component, and an elastic arm. The connection component is fixedly connected to the sealing body. The protrusion component is protruded from a surface of the connection component. An end of the elastic arm is fixed to an end of the connection component, another end of the elastic arm is extended out of the connection component to form a free end, and the free end and an outer surface of the protrusion component form the two inner sealing walls.

According to a third aspect of the application, there is provided a sealing system assembly of a window glass, the sealing system assembly includes a cover plate, a guide member, the outer trim panel according to the above embodiment, and the glass run seal according to the above embodiment. The cover plate is arranged at an interval from the window glass. The guide member is fixed to an inner surface of the window glass. The outer trim panel is fixed to an inner surface of the cover plate. The outer sealing lip is located between the cover plate and the window glass, and blocks a gap between the cover plate and the window glass; or, a part of the outer trim panel extends to a side of the cover plate close to the window glass, and the outer sealing lip is located between the part of the outer trim panel extended to the side of the cover plate close to the window glass and the window glass, and blocks a gap between the part and the window glass. The glass run seal further includes a guide rail component, the guide rail component connects the first abutment component to the sealing body, and is bent to form a first guide rail groove, and an inner wall of the first guide rail groove is configured to abut against at least a part of the guide member. The second abutment structure abuts against the first abutment structure, and is configured to apply an acting force facing toward an outer surface of the window glass to the outer sealing lip.

Further, at least a part of the outer sealing lip may be in the same plane as an outer surface of the cover plate, and the outer surface of the outer sealing lip is in the same plane as the outer surface of the window glass, in a state where the window glass is mounted in the sealing system assembly.

Further, the outer sealing lip may be provided with a third abutment groove, and the cover plate abuts against an inner wall of the third abutment groove.

Further, the sealing system assembly may further include a sheet metal member, at least a part of the sheet metal member is located in the first sealing groove.

Further, the sealing system assembly may further include a window frame trim panel, the glass run seal is further provided with a second sealing groove, the second sealing groove is located between the sealing body and the first sealing groove, and a part of the window frame trim panel is located in the second sealing groove.

Further, the first sealing groove may be opened in a direction opposite to the second sealing groove.

According to a fourth aspect of the application, there is provided a sealing system assembly, the sealing system assembly includes the profile assembly according to the above embodiment, a guide member, and the glass run seal according to the above embodiment. The profile assembly is arranged at an interval from the window glass. The guide member is fixed to an inner surface of the window glass. The outer sealing lip is located between the profile assembly and the window glass, and blocks a gap between the profile assembly and the window glass. The glass run seal further includes a guide rail component, the guide rail component connects the first abutment component to the sealing body, and is bent to form a first guide rail groove, and an inner wall of the first guide rail groove is configured to abut against at least a part of the guide member. The third abutment structure abuts against the first abutment structure, and is configured to apply an acting force facing toward an outer surface of the window glass to the outer sealing lip.

Further, at least a part of the outer sealing lip may be in the same plane as an outer surface of the profile assembly, and the outer surface of the outer sealing lip is in the same plane as the outer surface of the window glass, in a state where the window glass is mounted in the sealing system assembly.

According to a fifth aspect of the application, there is provided a door of a vehicle, the door includes a door frame, a guide rail member, the sealing system assembly according to the above embodiment, and a window glass. The door frame is provided with a window opening. The guide rail member is provided with a second guide rail groove, and fixedly connected to the door frame. The outer trim panel is fixedly connected to the door frame. An inner surface of the window glass is fixedly connected to the guide member, the guide member is configured to abut against an inner wall of the first guide rail groove or an inner wall of the second guide rail groove, and the window glass is movable relative to the door frame in an extension direction of the first guide rail groove and an extension direction of the second guide rail groove, and opens or covers at least a part of the window opening. The outer trim panel is provided with a limit component, the limit component abuts against a part of the guide rail component connected to the sealing body, and abuts against the sealing body, and a preset included angle is present between an extension direction of the part of the guide rail component connected to the sealing body and an extension direction of the sealing body. The door further includes a connection member, the connection member is configured to fix the guide rail member to the door frame, and configured to fix the outer trim panel to the door frame.

Further, at least a part of the outer sealing lip may be in the same plane as an outer surface of the cover plate and an outer surface of the window glass.

Further, the connection member may include a first connection member and a second connection member. The first connection member is configured to fixedly connect the guide rail member to the door frame. The second connection member is configured to fixedly connect the outer trim panel to the door frame. A part of the door frame connected to the first connection member is fixed relative to a part of the door frame connected to the second connection member.

Further, the part of the door frame connected to the first connection member and the part of the door frame connected to the second connection member may be obtained by integrated manufacture.

Further, the connection member may be configured to connect the guide rail member to the outer trim panel, and configured to fixedly connect the guide rail member and the outer trim panel to the door frame.

Further, the door may further include a third connection member and a fourth connection member. The third connection member is configured to fixedly connect the guide rail member to the door frame. The fourth connection member is configured to fixedly connect the outer trim panel to the door frame.

Further, the outer trim panel may be provided with multiple first positioning structures arranged at intervals. The door frame is provided with second positioning structures configured to abut against the first positioning structures respectively, so that the first guide rail groove is communicated with the second guide rail groove, and the first guide rail groove smoothly transits to the second guide rail groove.

According to a sixth aspect of the application, there is provided a door of a vehicle, the door includes a door frame, a guide rail member, the sealing system assembly according to the above embodiment, and a window glass. The door frame is provided with a window opening. The guide rail member is provided with a second guide rail groove, and fixedly connected to the door frame. The profile assembly is fixedly connected to the door frame. An inner surface of the window glass is fixedly connected to the guide member, the guide member is configured to abut against an inner wall of the first guide rail groove or an inner wall of the second guide rail groove, and the window glass is movable relative to the door frame in an extension direction of the first guide rail groove and an extension direction of the second guide rail groove, and opens or covers at least a part of the window opening. The profile assembly is provided with a limit component, the limit component abuts against a part of the guide rail component connected to the sealing body, and abuts against the sealing body, and a preset included angle is present between an extension direction of the part of the guide rail component connected to the sealing body and an extension direction of the sealing body. The door further includes a connection member, the connection member is configured to fix the guide rail member to the door frame, and configured to fix the profile assembly to the door frame.

According to a seventh aspect of the application, there is provided a vehicle, the vehicle includes a body and the door according to the above embodiment. The body is provided with a door opening. The door is movably connected to the body, to open or cover at least a part of the door opening.

The application provides an outer trim panel, the outer trim panel is configured to abut against a glass run seal, the glass run seal is provided with an outer sealing lip and a first abutment structure, the outer trim panel is provided with a second abutment structure, and the second abutment structure is configured to abut against the first abutment structure, and apply an acting force facing toward the outer sealing lip to the first abutment structure. It may be understood that in a state where the outer trim panel is assembled to the glass run seal, the first abutment structure abuts against the second abutment structure, to provide support for the outer sealing lip by an acting force between the first abutment structure and the second abutment structure; and in a usage state, the acting force is in a direction opposite to a collapse direction of the outer sealing lip, to limit a collapse trend of the outer sealing lip, thereby reducing a possibility of collapse of the outer sealing lip and improving sealing reliability of the outer sealing lip. The application further provides a flush type of door, the outer sealing lip of the glass run seal seals the gap between the cover plate and the window glass, and at least a part of the outer sealing lip may be flush with the outer surface of the cover plate and the outer surface of the window glass, to improve an aesthetic degree of the door and reduce air resistance of the door; furthermore, limitation to the outer sealing lip is supported by the acting force between the first abutment structure and the second abutment structure, to limit the collapse trend of the outer sealing lip, so that the outer sealing lip, the cover plate and the window glass may be in a flush state more reliably.

### BRIEF DESCRIPTION OF THE DRAWINGS

FIG. 1 is a schematic assembly diagram of an outer trim panel and a glass run seal provided in an embodiment of the application.
FIG. 2 is a schematic assembly diagram of a first type of second abutment structure of an outer trim panel and a first type of first abutment structure of a glass run seal provided in an embodiment of the application.
FIG. 3 is a schematic assembly diagram of a second type of second abutment structure of an outer trim panel and a second type of first abutment structure of a glass run seal provided in an embodiment of the application.
FIG. 4 is a schematic assembly diagram of a third type of second abutment structure of an outer trim panel and a third type of first abutment structure of a glass run seal provided in an embodiment of the application.
FIG. 5 is a schematic assembly diagram of an outer trim panel and a cover plate provided in an embodiment of the application.
FIG. 6 is a schematic assembly diagram of a third abutment structure of a profile assembly and a first abutment structure of a glass run seal provided in an embodiment of the application.
FIG. 7 is a schematic assembly diagram of a glass run seal and an outer trim panel of a sealing system assembly, and a window glass provided in an embodiment of the application.
FIG. 8 is a schematic structural diagram of a glass run seal provided in an embodiment of the application.
FIG. 9 is a schematic structural diagram of another glass run seal provided in an embodiment of the application.
FIG. 10 is a schematic structural diagram of a door provided in an embodiment of the application.
FIG. 11 is a schematic structural diagram of another door provided in an embodiment of the application.
FIG. 12 is an exploded diagram from a visual angle of a door frame, a cover plate and a guide rail member of a door provided in an embodiment of the application.
FIG. 13 is an exploded diagram from another visual angle of a door frame, a cover plate and a guide rail member of a door provided in an embodiment of the application.
FIG. 14 is a schematic assembly diagram of a lower retainer and a lower sealing member of a door provided in an embodiment of the application.

### Description of reference numerals

1. door; 10. sealing system assembly; 100. glass run seal; 110. sealing body; 120. first sealing component; 121. first sealing groove; 122. inner sealing wall; 123. connection component; 124. protrusion component; 125. elastic arm; 126. second sealing groove; 130. outer sealing lip; 131. third abutment groove; 140. guide rail component; 141. first guide rail groove; 150. first abutment component; 151. first abutment structure; 151A. first type of first abutment structure; 151B. second type of first abutment structure; 151C. third type of first abutment structure; 200. sheet metal member; 300. cover plate; 310. first positioning structure; 400. guide member; 500. outer trim panel; 520. fixation component; 530. second abutment component; 531. second abutment structure, 531A. first type of second abutment structure; 531B. second type of second abutment structure; 531C. third type of second abutment structure; 540. reinforcement component; 550. limit component; 501. profile assembly; 502. third abutment structure; 600. window frame trim panel; 20. window glass; 30. door frame; 32. second positioning structure; 40. guide rail member; 41. second guide rail groove; 43. lower retainer; 431. fifth abutment structure; 44. lower sealing member; 441 lower sealing body; 442. lower guide rail component; 443. lower abutment component; 444. lower outer sealing lip; 445. sixth abutment structure; 446. lower connection component; 447. lower connection groove; 51. connection member; 511. first connection member; 512. second connection member; 52. third connection member; 53. fourth connection member.

### DETAILED DESCRIPTION

In order to make the purpose, technical solutions and advantages of the application more apparent and clearer, the application will be further described in detail below with reference to the drawings and embodiments. It should be understood that specific embodiments described here are only intended to explain the application and are not intended to limit the application.

Various specific technical features described in the specific embodiments may be combined in any suitable manner without conflict, for example, different embodiments and technical solutions may be formed by combining different specific technical features. In order to avoid unnecessary repetition, various possible combinations of various specific technical features in the application will not be described separately.

Terms "first, second, ..." involved in the following descriptions are only intended to distinguish different objects, and do not indicate that there are similarities or associations between the objects. It should be understood that descriptions of "upper", "lower", "outer" and "inner" related to orientations are all orientations in a normal usage state, and "left" and "right" directions indicate left and right directions illustrated in a specific corresponding schematic diagram, and may be or may not be left and right directions in the normal usage state.

It should be noted that terms "include", "including" or any other variant thereof are intended to encompass a non-exclusive inclusion, so that a process, method, article or apparatus including a series of elements includes not only those elements, but also other elements which are not explicitly listed, or further includes elements inherent to such process, method, article or apparatus. Without any further limitation, an element defined by a phrase "include a..." does not preclude presence of additional identical elements in a process, method, article or apparatus including the element. A term "connection" includes both direct connection and indirect connection, unless otherwise specified.

In the following detailed implementations, an outer trim panel may be configured to abut against any glass run seal, and the outer trim panel may limit relative movement of the glass run seal and the outer trim panel, in a state where the outer trim panel abuts against the glass run seal. Structures of the outer trim panel and cooperation relationship between the outer trim panel and the glass run seal will be exemplarily described below.

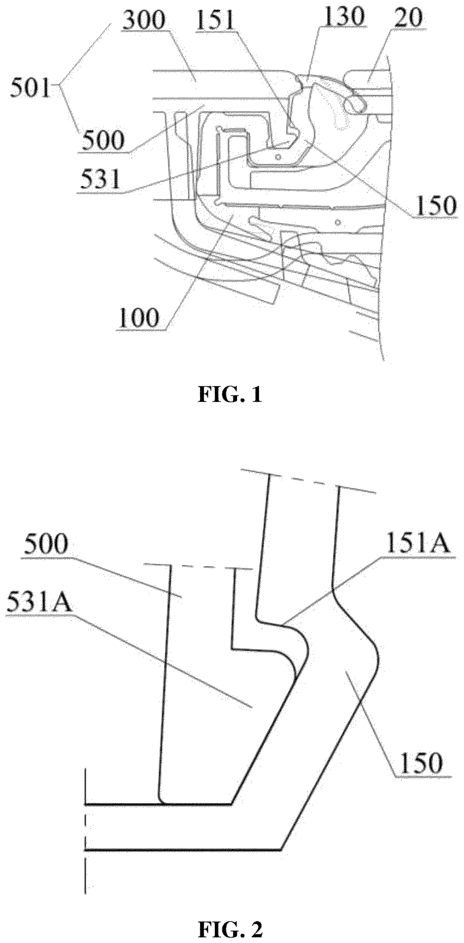

In some embodiments, as shown in FIG. 1, a glass run seal 100 is provided with an outer sealing lip 130 and a first abutment structure 151, an outer trim panel 500 is provided with a second abutment structure 531, and the second abutment structure 531 is configured to abut against the first abutment structure 151, and configured to apply an acting force facing toward the outer sealing lip 130 to the first abutment structure 151, thereby supporting the outer sealing lip 130 by an acting force between the first abutment structure 151 and the second abutment structure 531; and in a usage state, the acting force applied by the second abutment structure 531 to the first abutment structure 151 is in a direction opposite to a collapse direction of the outer sealing lip 130, thereby limiting a collapse trend of the outer sealing lip 130 by the acting force. A principle of limiting the collapse trend of the outer sealing lip 130 by the outer trim panel 500 will be exemplarily described below, by taking an application scenario where the glass run seal 100 is configured to seal a gap between a window glass and a cover plate of a vehicle, and the outer trim panel 500 is configured to abut against the glass run seal 100, as an example.

The outer sealing lip 130 is located between the window glass and the cover plate, and abuts against the window glass and the cover plate respectively, to seal the gap between the window glass and the cover plate. The outer sealing lip 130 may be collapsed by air pressure outside the vehicle or an acting force outside the vehicle when the vehicle is moving, resulting in failure of sealing the gap between the window glass and the cover plate by the outer sealing lip 130. The outer trim panel 200 is fixed to an inner surface of the cover plate, and the second abutment structure 531 abuts against the first abutment structure 151, and may apply an acting force facing toward an outer surface of the window glass to the first abutment structure 151, thereby limiting a trend of the outer sealing lip 130 collapsing toward interior of the vehicle, and improving reliability of sealing the gap between the window glass and the cover plate by the outer sealing lip 130.

It should be noted that the first abutment structure 151 and the second abutment structure 531 may be any structure capable of providing an acting force of limiting the collapse trend of the outer sealing lip 130 by abutting against the outer sealing lip 130. Structures of the first abutment structure 151 and the second abutment structure 531, and a principle of limiting the collapse trend of the outer sealing lip 130 by the first abutment structure 151 and the second abutment structure 531 will be exemplarily described below with reference to FIG. 2 to FIG. 4. It should be understood by those skilled in the art that the first abutment structure 151 and the second abutment structure 531 may also be other structures besides structures shown in FIG. 2 to FIG. 4.

As shown in FIG. 2, a first type of first abutment structure 151A is a first abutment groove formed by recessing a surface of the first abutment component 150, a first type of second abutment structure 531A is a first abutment boss protruded from a surface of the outer trim panel 500 facing toward the outer sealing lip 130, and the first abutment boss (the first type of second abutment structure 531A) abuts against an inner wall of the first abutment groove (the first type of first abutment structure 151A). When the outer sealing lip 130 is subject to an external force facing toward an inner surface of a window glass 20, a supporting force between the first abutment boss (the first type of second abutment structure 531A) and the inner wall of the first abutment groove (the first type of first abutment structure 151A) faces toward an outer surface of the window glass 20, thereby forming support for the outer sealing lip 130, and reducing a possibility of collapse and deformation of the outer sealing lip 130 due to the external force.

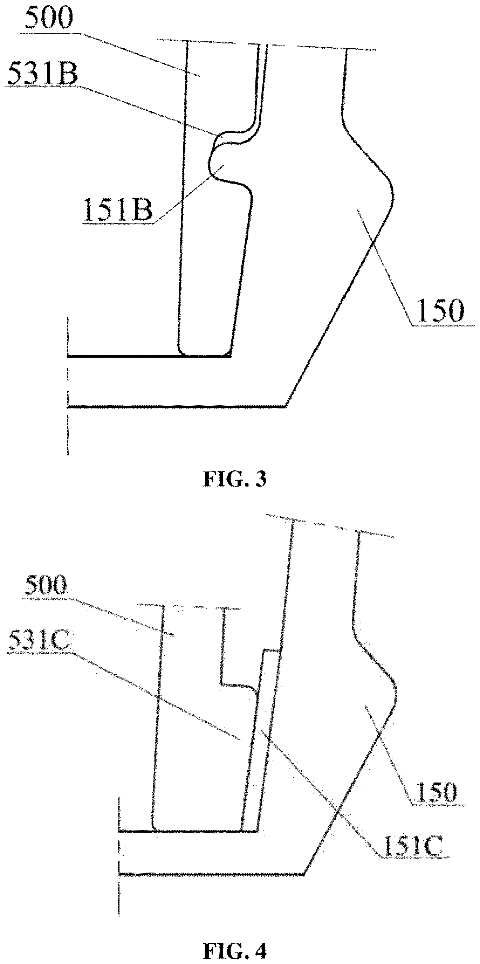

As shown in FIG. 3, a second type of first abutment structure 151B is a second abutment boss protruded from a surface of the first abutment component 150, a second type of second abutment structure 531B is a second abutment groove formed by recessing a surface of the outer trim panel 500 facing toward the outer sealing lip 130, and the second abutment boss (the second type of first abutment structure 151B) abuts against an inner wall of the second abutment groove (the second type of second abutment structure 531B). A supporting force between the second abutment boss (the second type of first abutment structure 151B) and the inner wall of the second abutment groove (the second type of second abutment structure 531B) faces toward the outer surface of the window glass, thereby forming support for the outer sealing lip 130, and reducing the possibility of collapse and deformation of the outer sealing lip 130 due to the external force. It may be understood that the acting force between the first abutment structure and the second abutment structure may be a positive pressure between the abutment boss and the inner wall of the abutment groove, and when the outer sealing lip 130 is subject to an external force pointed to an inner surface of the window glass 20, the positive pressure is pointed to the outer surface of the window glass 20, thereby reducing the possibility of collapse and deformation of the outer sealing lip 130 due to the external force. In some other embodiments, as shown in FIG. 3, the second abutment groove (the second type of second abutment structure 531B) is adjacent to a cover plate 300, that is, an inner surface of the cover plate 300 and an inner concave part of the first abutment component 150 form the second abutment groove (the second type of second abutment structure 531B), thereby reducing cost and difficulty of manufacturing the outer trim panel 500.

As shown in FIG. 4, a third type of first abutment structure 151C is a friction layer located in a surface of the first abutment component 150, a friction coefficient of the friction layer (the third type of first abutment structure 151C) is greater than a preset threshold, a third type of second abutment structure 531C is a compression boss protruded from a surface of the outer trim panel 500 facing toward the outer sealing lip 130, and the compression boss (the third type of second abutment structure 531C) abuts against the friction layer (the third type of first abutment structure 151C), to form a friction force pointed to the outer surface of the window glass 20 between contact surfaces of the compression boss (the third type of second abutment structure 531C) and the friction layer (the third type of first abutment structure 151C), that is, an acting force formed by abutting the third type of first abutment structure 151C against the third type of second abutment structure 531C is a friction force, collapse and deformation of the outer sealing lip 130 is limited by the friction force pointed to the outer surface of the window glass 20.

The application provides an outer trim panel, the outer trim panel is configured to abut against a glass run seal, the glass run seal is provided with an outer sealing lip and a first abutment structure, the outer trim panel is provided with a second abutment structure, and the second abutment structure is configured to abut against the first abutment structure, and apply an acting force facing toward the outer sealing lip to the first abutment structure. It may be understood that in a state where the outer trim panel is assembled to the glass run seal, the first abutment structure abuts against the second abutment structure, to provide support for the outer sealing lip by an acting force between the first abutment structure and the second abutment structure; and in a usage state, the acting force is in a direction opposite to a collapse direction of the outer sealing lip, to limit a collapse trend of the outer sealing lip, thereby reducing a possibility of collapse of the outer sealing lip and improving sealing reliability of the outer sealing lip.

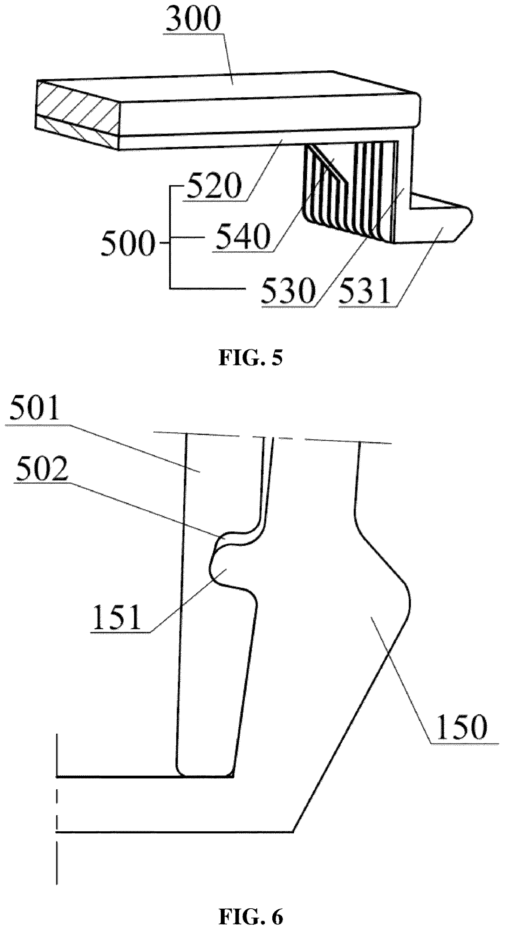

In some embodiments, as shown in FIG. 5, the outer trim panel 500 includes a fixation component 520 and a second abutment component 530. The second abutment component 530 is protruded from a surface of the fixation component 520, and a surface of the second abutment component 530 facing toward the outer sealing lip 130 is provided with the second abutment structure 531. It may be understood that the second abutment component 530 is arranged to extend in a direction away from the outer sealing lip 130, and the second abutment structure 531 is arranged on the second abutment component 530, so that the second abutment structure 531 is located at a position away from the outer sealing lip 130; furthermore, the first abutment component 150 is bent to form an accommodation space configured to accommodate the second abutment component 530, and a surface of the accommodation space facing toward the second abutment structure 531 is provided with the first abutment structure 151, so that a position where the first abutment structure 151 abuts against the second abutment structure 531 is away from the outer sealing lip 130, thereby increasing a length of the first abutment component 150 between the position where the first abutment structure 151 abuts against the second abutment structure 531 and the outer sealing lip 130, so that an abutment force between the first abutment structure 151 and the second abutment structure 531 is borne by a longer structure of the first abutment component 150, thereby reducing a possibility of breakage or plastic deformation of the outer sealing lip 130 due to the abutment force between the first abutment structure 151 and the second abutment structure 531. Furthermore, the outer trim panel 500 further includes a reinforcement component 540, a part of the reinforcement component 540 is connected to the fixation component 520, and another part of the reinforcement component 540 is connected to the second abutment component 530, so that structural rigidity of the second abutment component 530 is increased by the reinforcement component 540 fixed between the fixation component 520 and the second abutment component 530, and an amount of elastic deformation of the second abutment component 530 due to the external force is reduced, thereby reducing a possibility of the first abutment structure 151 separating from the second abutment structure 531 due to deformation of the second abutment component 530, so that the first abutment structure 151 may reliably abut against the second abutment structure 531, and thus the outer sealing lip 130 may be reliably supported.

An embodiment of the application further provides a profile assembly. As shown in FIG. 6, the profile assembly 501 is provided with a third abutment structure 502, the third abutment structure 502 is configured to abut against the first abutment structure 151 of the glass run seal 100, and a force is acted on the outer sealing lip 130 of the glass run seal 100 by an acting force between the third abutment structure 502 and the first abutment structure 151, to support the outer sealing lip 130. It should be noted that the third abutment structure 502 in FIG. 6 is a groove formed by recessing toward interior, the first abutment structure 151 is a protrusion located in the groove and capable of abutting against an inner surface of the groove, and structures of the third abutment structure 502 and the first abutment structure 151 may also be similar to those described in any one of FIG. 2 to FIG. 4, that is, the third abutment structure 502 may be a protrusion, the first abutment structure 151 may be a groove formed by recessing toward interior, and the protrusion is located in the groove and capable of abutting against an inner surface of the groove; the first abutment structure 151 may also be a part with a high friction coefficient, the third abutment structure 502 may also be a part abutting against the above part, and support of the outer sealing lip is achieved by a friction force between the two parts.

An embodiment of the application further provides a glass run seal, the glass run seal may be applied between any structure which needs to be sealed. Exemplarily, the glass run seal may be applied between a rotation shaft and a body of a machine tool, to reduce a possibility of leakage of lubrication oil of the machine tool. Exemplarily, the glass run seal may also be applied between a door frame and a door body, to reduce a possibility of dust or air passing through a gap between the door frame and the door body. Exemplarily, the glass run seal may also be applied to a window glass, and located between a window frame and the window glass, to reduce a possibility of air and noise passing through a gap between the window frame and the window glass. In order to facilitate descriptions, structures of the glass run seal will be exemplarily described below by taking application of the glass run seal to the window glass as an example.

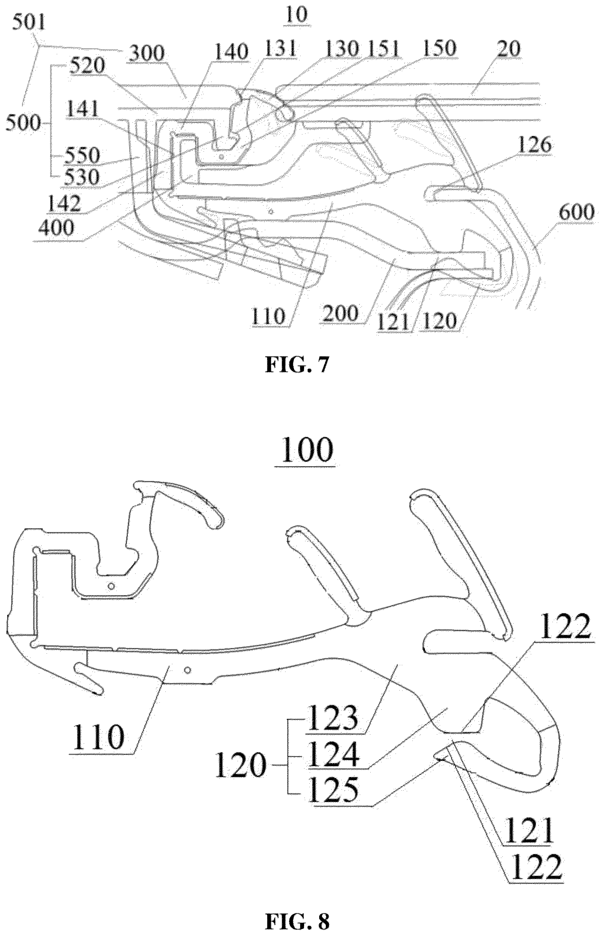

In some embodiments, as shown in FIG. 7, the glass run seal 100 includes a sealing body 110 and a first abutment component 150, the first abutment component 150 is connected to the sealing body 110, and an outer sealing lip 130 is fixedly connected to the first abutment component 150. The first abutment component 150 is provided with a first abutment structure 151, and the first abutment structure 151 is used with the second abutment structure 531 of the outer trim panel 500 in FIG. 1, to provide a supporting force for the outer sealing lip 130, limit the collapse trend of the outer sealing lip 130, and improve sealing reliability of the outer sealing lip 130.

In some embodiments, as shown in FIG. 8, the glass run seal 100 further includes a first sealing component 120. The first sealing component 120 is located at an end of the sealing body 110, and provided with a first sealing groove 121. The first sealing groove 121 is connected to a to-be-sealed structure, that is, insertion of the to-be-sealed structure into the first sealing groove 121 may achieve connection between the glass run seal 100 and the to-be-sealed structure, and sealing of the to-be-sealed structure is achieved by the sealing body 110 and the first sealing component 120. Exemplarily, insertion of sheet metal of a door into the first sealing groove 121 may connect the glass run seal 100 to the door, and the sealing body 110 and the first sealing component 120 block the gap between the window glass and the window frame. The first sealing groove 121 is provided with at least two inner sealing walls 122, the two inner sealing walls 122 are arranged opposite to each other, and may clamp sheet metal in a state where the sheet metal is inserted into the first sealing groove 121; furthermore, a distance between the two inner sealing walls 122 decreases in a direction from an opening of the first sealing groove 121 to interior of the first sealing groove 121. It may be understood that there is a large distance between the two inner sealing walls 122 at a position close to the opening of the first sealing groove 121, and the distance between the two inner sealing walls 122 decreases gradually from the opening to interior of the first sealing groove 121; in a process of inserting the sheet metal into the first sealing groove 121, there is a large distance between the two inner sealing walls 122, which reduces a possibility of the sheet metal interfering with the first sealing component when it is inserted from the opening of the first sealing groove 121, so that the sheet metal may be inserted into the first sealing groove 121 more conveniently; furthermore, in a process of gradually inserting the sheet metal into the first sealing groove 121, the distance between the two inner sealing walls 122 decreases gradually, so that the two inner sealing walls 122 may clamp the sheet metal gradually, thereby achieving assembly of the sheet metal. It should be noted that shapes of the two inner sealing walls may be any shape capable of decreasing the distance between the two inner sealing walls in a direction from the position close to the opening of the first sealing groove 121 to interior of the first sealing groove 121. Exemplarily, one of the inner sealing walls 122 is a planar surface, another of the inner sealing walls is a curved surface, there is a large distance between the curved surface and the planar surface at the position close to the opening of the first sealing groove 121, and the distance between the curved surface and the planar surface decreases in a direction from the opening of the first sealing groove 121 to interior of the first sealing groove 121. Exemplarily, each of the two inner sealing walls 122 is a planar surface, and the two planar surfaces form a preset included angle there-between, so that a distance between the two planar surfaces decreases in a direction from a position at the opening of the first sealing groove 121 to interior of the first sealing groove 121.

An embodiment of the application provides a glass run seal, the glass run seal includes a sealing body and a first sealing component, the first sealing component is located at an end of the sealing body, and provided with a first sealing groove, connection between the glass run seal and a to-be-sealed structure may be achieved by inserting the to-be-sealed structure into the first sealing groove, and sealing of the to-be-sealed structure may be achieved by the sealing body and the first sealing component. Furthermore, the first sealing groove is provided with at least two inner sealing walls, the two inner sealing walls are arranged opposite to each other, and a distance between the two inner sealing walls decreases in a direction from an opening of the first sealing groove to interior of the first sealing groove. Therefore, in a process of inserting the to-be-sealed structure into the first sealing groove, the to-be-sealed structure may be inserted from an opening where there is a large distance between the two inner sealing walls; and as the distance between the two inner sealing walls decreases during insertion, the two inner sealing walls may clamp the to-be-sealed structure, which reduces a possibility of the to-be-sealed structure interfering with the first sealing component when it is inserted into the first sealing groove from the opening, and improves convenience of mounting the glass run seal.

In some embodiments, as shown in FIG. 7, one of the two inner sealing walls 122 is a planar surface, another of the two inner sealing walls is a curved surface, and the curved surface is protruded toward the planar surface, so that the distance between the two inner sealing walls 122 decreases in a direction from the opening to interior of the first sealing groove 121, and the distance between the two inner sealing walls 122 may change more gently. In some other embodiments of FIG. 7, each of the two inner sealing walls 122 is a planar surface, and the two inner sealing walls 122 form a preset included angle there-between. Cost and difficulty of manufacturing the inner sealing walls may be reduced by configuring the inner sealing walls 122 as planar surfaces.

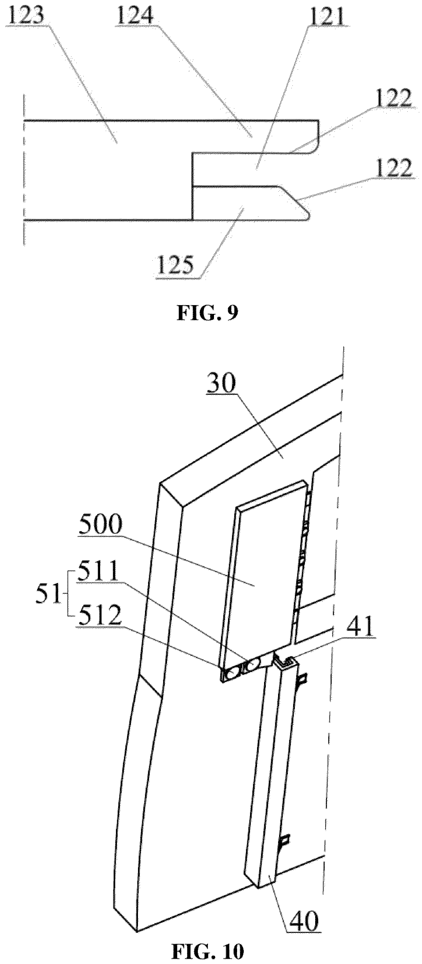

In some embodiments, as shown in FIG. 8, the first sealing component 120 includes a connection component 123, a protrusion component 124, and an elastic arm 125. The connection component 123 is fixedly connected to an end of the sealing body 110. The protrusion component 124 is protruded from a surface of the connection component 123. An end of the elastic arm 125 is fixed to an end of the connection component 123, another end of the elastic arm 125 is extended out of the connection component 123 to form a free end. In order to facilitate descriptions, an extension direction of the elastic arm 125 at the free end is referred to as a second direction, and the elastic arm 125 generates elastic deformation in a state where it is subject to an external force non-parallel to the second direction at the free end. The free end of the elastic arm 125 and an outer surface of the protrusion component 124 form the two inner sealing walls 122 of the first sealing groove 121, that is, the free end of the elastic arm 125 extends to a position facing toward a surface of the protrusion component 124, and forms the two inner sealing walls 122 of the first sealing groove 121 with the surface of the protrusion component 124. In a process of inserting the to-be-sealed structure into the first sealing groove 121, the to-be-sealed structure comes into contact with the inner sealing walls 122 formed by the free end of the elastic arm 125, and applies an acting force non-parallel to the second direction to the inner sealing wall 122, so that the elastic arm 125 generates elastic deformation of the free end away from the surface of the protrusion component 124, thereby inserting the to-be-sealed structure into the first sealing groove 121 more conveniently; furthermore, elastic force generated by the elastic arm 125 in an elastic deformation state further increases an acting force of the two inner sealing walls 122 clamping the to-be-sealed structure, and further improves reliability of sealing the to-be-sealed structure by the first sealing groove 121 of the glass run seal. According to different positions of the inner sealing wall 122 formed by the protrusion component 124 and an end of the connection component 123 connected to the elastic arm 125, the elastic arm 125 extends in different directions. Hereinafter, in order to facilitate descriptions, a direction from the end of the connection component 123 pointing to be away from the connection component 123 is referred to as an outer side direction, and a direction from the end of the connection component 123 pointing to be close to the connection component 123 is referred to as an inner side direction. As shown in FIG. 9, in case that the inner sealing wall 122 formed by the protrusion component 124 is located in the outer side direction of the end of the connection component 123, the elastic arm 125 extends from the end of the connection component 123 in the outer side direction of the end, until the inner sealing wall 122 formed by the elastic arm 125 faces the inner sealing wall 122 formed by the protrusion component 124, and the extension direction of the elastic arm 125 may be a straight line, a fold line or a curve. As shown in FIG. 8, in case that the inner sealing wall 122 formed by the protrusion component 124 is located in the inner side direction of the end of the connection component 123, the elastic arm 125 extends from the end of the connection component 123 in the outer side direction of the end and then in the inner side direction of the end, until the inner sealing wall 122 formed by the free end of the elastic arm 125 is arranged to be opposite to the inner sealing wall 122 formed by the protrusion component 124, that is, the extension direction of the elastic arm 125 changes at least once, and the extension direction of the elastic arm 125 may be a fold line or a curve.

It should be noted that according to the shape of the free end of the elastic arm 125, and an extension direction of the free end is different from a direction in which the to-be-sealed structure is inserted into the first sealing groove 121, there are different principles of the elastic arm 125 generating elastic deformation in a process of inserting the to-be-sealed structure into the first sealing groove 121. Specifically, in case that the inner sealing wall formed by the free end of the elastic arm 125 is a curved surface or a planar surface with an extension direction non-parallel to the direction in which the to-be-sealed structure is inserted into the first sealing groove 121, as the to-be-sealed structure is inserted into the first sealing groove 121, an acting force between the to-be-sealed structure and the inner sealing wall 122 formed by the free end of the elastic arm 125 may generate a component non-parallel to the second direction, and this component enables the elastic arm 125 to generate elastic deformation; in case that the inner sealing wall 122 formed by the free end of the elastic arm 125 is a planar surface with an extension direction parallel to the direction in which the to-be-sealed structure is inserted into the first sealing groove 121, since the distance between two inner sealing walls decreases in a direction from the opening of the first sealing groove 121 to interior of the first sealing groove 121, the inner sealing wall 122 formed by the protrusion component 124 is a curved surface or a planar surface forming a preset included angle with the inner sealing wall 122 formed by the free end of the elastic arm 125, and in a process of inserting the to-be-sealed structure into the first sealing groove 121, an acting force between the to-be-sealed structure and the inner sealing wall 122 formed by the protrusion component 124 enables the to-be-sealed structure to move in a direction of closing to the inner sealing wall 122 formed by the free end of the elastic arm 125, so that the to-be-sealed structure compresses against the inner sealing wall 122 formed by the free end of the elastic arm 125, thereby enabling the elastic arm 125 to generate elastic deformation.

An embodiment of the application further provides a sealing system assembly of a window glass, the sealing system assembly of the window glass may be applied to a window with a liftable glass of any vehicle, and is configured to seal a gap between the liftable glass of the window and a window frame, sheet metal, outer trim panel or other components of the window, to reduce a possibility of air or dust passing through the gap between the liftable glass and the window frame, sheet metal, outer trim panel or other components of the window; furthermore, the sealing system assembly is further configured to provide guidance for a liftable movement of the window glass.

In some embodiments, as shown in FIG. 7, the sealing system assembly 10 includes a cover plate 300, a guide member 400, the outer trim panel 500 as shown in any one of FIG. 1 to FIG. 5 of the drawings, and the glass run seal 100 as shown in any one of FIG. 7 to FIG. 9.

The cover plate 300 is fixed to an outer surface of the window frame adjacent to the window glass 20, and the cover plate 300 is arranged at an interval from the window glass, to reduce a possibility of movement interference of the window glass 20 with the cover plate 300 in a process of lifting or lowering the window glass. Furthermore, the glass run seal 100 further includes an outer sealing lip 130, the outer sealing lip 130 is fixed to another end of the guide rail component 140 opposite to an end thereof connected to the sealing body 110, and the outer sealing lip 130 is located between the cover plate 300 and the window glass 20, and blocks a gap between the cover plate 300 and the window glass 20, to reduce a possibility of air or dust passing through a gap between the window glass 20 and the cover plate 300. Furthermore, the guide member 400 is fixed to an inner surface of the window glass 20, to cooperate with structures of the glass run seal 100 to form guidance and limitation of the window glass. Specifically, the glass run seal 100 further includes a guide rail component 140, the guide rail component 140 is fixed to the sealing body 110, and is bent to form a first guide rail groove 141, and an inner wall of the first guide rail groove 141 is configured to abut against the guide member 400, so that movement of the window glass 20 in a direction perpendicular to the first guide rail groove 141 is limited by an acting force between the guide member 400 and interior of the first guide rail groove 141, and thus the window glass 20 moves in a direction of the first guide rail groove 141; the inner surface of the window glass 20 is a surface adjacent to a cabin of the vehicle, and the outer surface of the window glass 20 is a surface adjacent to space out of the vehicle. It may be understood that limitation and guidance of the window glass 20 are achieved by cooperation of the guide member 400 located in the inner surface of the window glass 20 and the guide rail component 140 of the glass run seal 100 located at an inner side of the window glass 20, and sealing of the gap between the cover plate 300 and the window glass 20 is achieved by the outer sealing lip 130 of the glass run seal 100, instead of providing a guide groove configured to accommodate the window glass at an edge of the cover plate and inserting the window glass into the guide groove, that is, instead of achieving sealing and guidance between the window glass and the cover plate 300 by insertion of the window into a U-shape glass run seal held by the cover plate 300 and the outer trim panel 500, it is unnecessary for the cover plate 300 to provide a structure protruded from the outer surface of the window glass 20, so that the outer surface of the window glass 20 may be flush with an outer surface of the cover plate 300, thereby forming a flush type of door, and the flush type of door enables the vehicle to have a better aerodynamic shape and reduce air resistance generated by the vehicle when the vehicle is moving. Furthermore, the second abutment structure 531 abuts against the first abutment structure 151, and is configured to apply an acting force facing toward an outer surface of the window glass to the outer sealing lip 130, and the outer surface of the window glass is a surface facing toward outside of the cabin. It may be understood that an acting force between the second abutment structure 531 and the first abutment structure 151 applies an acting force facing toward an outer surface of the window to the outer sealing lip 130, to support the outer sealing lip 130, thereby limiting the collapse trend of the outer sealing lip 130, and improving reliability of sealing the gap between the window glass 20 and the cover plate 300 by the outer sealing lip 130. In some other embodiments, a part of the outer trim panel 500 extends to a side of the cover plate 300 facing toward the window glass 20, the part is located between the cover plate 300 and the window glass 20, and the outer sealing lip 130 of the glass run seal 100 is located between the part of the outer trim panel 500 and the window glass 20, to seal a gap between the part and the window glass 20. Optionally, at least a part of the outer sealing lip 130 is in the same plane as an outer surface of the cover plate 300, and the outer surface of the outer sealing lip 130 is in the same plane as the outer surface of the window glass, in a state where the window glass is mounted in the sealing system assembly, that is, after the window is mounted in the sealing system assembly, at least a part of the outer surface of the outer sealing lip 130 is in the same plane as the outer surface of the cover plate 300 and the outer surface of the window glass, thereby forming the flush type of door.

In some other embodiments, the cover plate 300 and the outer trim panel 500 of the sealing system assembly 10 in FIG. 7 are integrated to form a profile assembly 501 as shown in FIG. 6, and the profile assembly 501 has structures and functions of both the cover plate 300 and the outer trim panel 500, while the profile assembly 501 is also provided with a third abutment structure 502 capable of abutting against the first abutment structure 151. Optionally, at least a part of the outer sealing lip 130 is in the same plane as an outer surface of the profile assembly 500, and the outer surface of the outer sealing lip 130 is in the same plane as the outer surface of the window glass, in a state where the window glass is mounted in the sealing system assembly, that is, after the window is mounted in the sealing system assembly, at least a part of the outer surface of the outer sealing lip 130 is in the same plane as the outer surface of the profile assembly 500 and the outer surface of the window glass, thereby forming the flush type of door.

In some embodiments, as shown in FIG. 7, the outer sealing lip 130 is further provided with a third abutment groove 131, and the cover plate 300 abuts against an inner wall of the third abutment groove 131. When the outer sealing lip 130 is subject to an external force, an acting force between the third abutment groove 131 and the cover plate 300 may limit collapse and deformation of the outer sealing lip 130 together with the acting force between the first abutment structure 151 and the second abutment structure 531, further improving reliability of sealing between the cover plate 300 and the window glass 20 by the outer sealing lip 130.

In some embodiments, as shown in FIG. 7, the sealing system assembly 10 further includes a sheet metal member 200, and the sheet metal member 200 is located in a door with a liftable window glass, to provide a position of mounting the glass run seal 100 and improve structural strength of the door. Specifically, a part of the sheet metal member 200 is located in the first sealing groove 121, and is clamped by two inner sealing walls 122 in FIG. 7 or FIG. 8, that is, in a state where a part of the sheet metal member 200 is inserted in the first sealing groove 121, the sheet metal member 200 achieves limitation of the glass run seal 100; furthermore, the glass run seal 100 achieves sealing between the sheet metal member 200 and the window glass 20, and since a distance between the two inner sealing walls 122 of the glass run seal 100 decreases in a direction from the opening of the first sealing groove 121 to interior of the first sealing groove 121, convenience of assembling the glass run seal 100 to the sheet metal member 200 may be improved. It should be noted that in FIG. 9, the first sealing component 120 with a contour shown in solid lines is a shape in a state where the first sealing component 120 is not assembled to the sheet metal member 200, and the first sealing component 120 with a contour shown in broken lines is a shape in a state where the first sealing component 120 is assembled to the sheet metal member 200.

In some embodiments, as shown in FIG. 7, the sealing system assembly 100 further includes a window frame trim panel 600, the first sealing component 120 is further provided with a second sealing groove 126, the second sealing groove 126 is located between the sealing body 110 and the first sealing groove 121, and a part of the window frame trim panel 600 is located between the second sealing groove 126. In a state where the window frame trim panel 600 is inserted into the second sealing groove 126 and the sheet metal member 200 is inserted into the first sealing groove 121, not only the glass run seal 100 may be mounted more reliably by the sheet metal member 200 and the window frame trim panel 600, but also the glass run seal 100 may seal a gap between the sheet metal member 200 and the window frame trim panel 600. Optionally, the first sealing groove 121 is opened in a direction opposite to the second sealing groove 126, so that the sheet metal member 200 and the window frame trim panel 600 are inserted into the first sealing groove 121 and the second sealing groove 126 from opposite sides of the glass run seal 100 respectively, thereby reducing a possibility of assembly interference between the glass run seal 100 and the sheet metal member 200 and the window frame trim panel 600 in a process of mounting the glass run seal 100, and further improving convenience of mounting the glass run seal 100.

An embodiment of the application further provides a door of a vehicle, and the door of the vehicle may be any type of door with a liftable glass. Exemplarily, the door may be a push-pull door, a sliding door, or a gull-wing door.

In some embodiments, as shown in FIG. 10, the door 1 includes a door frame 30, a guide rail member 40, the sealing system assembly 10 as shown in FIG. 7, and a window glass 20. The guide rail member 40 is fixedly connected to the door frame 30. With reference to FIG. 7 and FIG. 10, an inner surface of the window glass 20 is fixedly connected to the guide member 400 of the sealing system assembly 10, the guide member 400 is configured to abut against an inner wall of the first guide rail groove 141 or an inner wall of the second guide rail groove 41, and the window glass 20 is movable relative to the door frame 30 in an extension direction of the first guide rail groove 141 and an extension direction of the second guide rail groove 41, and opens or covers at least a part of a window opening (not shown). It may be understood that the window glass 20 is lifted or lowered relative to the door frame 30 due to the guide member 400 abutting against the first guide rail groove 141 or the second guide rail groove 41, and the window glass 20 may control an opening degree of the window opening in a process of lifting or lowering the window glass 20. Specifically, in a state where the window glass 20 is lowered to a lowest position, the window glass 20 does not cover the window opening; as the window glass 20 is lifted, the guide member 400 abuts against the inner wall of the second guide rail groove 41 via a lower sealing member 44, to guide movement of the window glass 20; in a state where an upper edge of the window glass 20 starts to extend into the window opening, the window glass 20 starts to shield the window opening, and at this time, the guide member 400 starts to abut against the inner wall of the first guide rail groove 141; as the window glass 20 continues to be lifted, the guide member 400 abuts against inner walls of the first guide rail groove 141 and the second guide rail groove 41, or the guide member 400 abuts against the inner wall of the first guide rail groove 141, so that guidance of the window glass 20 is achieved by abutting the first guide rail groove 141 and the second guide rail groove 41 against the guide member 400 via the lower sealing member 44 or by abutting the first guide rail groove 141 against the guide member 400; furthermore, an area of shielding the window opening by the window glass 20 increases gradually, and the window glass 20 completely shields the window opening when the window glass 20 is lifted to a highest position. With reference to FIG. 7 and FIG. 10, the outer trim panel 500 is provided with a limit component 550, the limit component 550 abuts against a part of the guide rail component 140 connected to the sealing body. Hereinafter, in order to facilitate descriptions, the part of the guide rail component 140 connected to the sealing body 110 is referred to as an abutment part 142. Furthermore, the limit component 550 abuts against the sealing body 110, and a preset included angle is present between an extension direction of the abutment part 142 and an extension direction of the sealing body 110. It may be understood that the extension direction of the abutment part 142 is not parallel to the extension direction of the sealing body 110, so that the limit component 550 may limit relative movement between the glass run seal 100 and the outer trim panel 500 in two directions, by abutting against the abutment part 142 and the sealing body 110, and the two directions are an extension direction perpendicular to the abutment part 142 and an extension direction perpendicular to the sealing body 110. It may be understood that fixation of relative position between the outer trim panel 500 and the glass run seal 100 may be achieved by abutting the limit component 550 of the outer trim panel 500 against the glass run seal 100. Optionally, the limit component 550 is detachably connected to the sheet metal member 200, so that limitation of the glass run seal 100 is achieved more reliably by the limit component 550 and the sheet metal member 200.

The door 1 further includes a connection member 51, the connection member 51 is configured to fix the guide rail member 40 to the door frame 30, and configured to fix the outer trim panel 500 to the door frame 30, thereby achieving fixation of relative position between the guide rail member 40 and the outer trim panel 500; furthermore, the outer trim panel 500 is fixedly connected to the cover plate 300, and the glass run seal 100 is limited by the limit component 550 of the outer trim panel 500 and the sheet metal member 200, thereby achieving fixation of relative position between the glass run seal 100 and the outer trim panel 500, that is, achieving fixation of relative position between the first guide rail groove 141 of the glass run seal 100 and the outer trim panel 500. It may be understood that relative position between the glass run seal 100 and the guide rail member 40 is kept fixed by the connection member 51, so that relative position between the first guide rail groove 141 of the glass run seal 100 and the second guide rail groove 41 of the lower sealing member 44 inserted in the guide rail member 40 is kept fixed, therefore the first guide rail groove 141 may keep smooth transition to the second guide rail groove 41. In some other embodiments, the cover plate 300 and the outer trim panel 500 of the sealing system assembly of the door are integrated to form a profile assembly 501 as shown in FIG. 6, and the profile assembly 501 has structures and functions of both the cover plate 300 and the outer trim panel 500.

In some embodiments, as shown in FIG. 7, at least a part of the outer sealing lip 130 is in the same plane as an outer surface of the cover plate 300 and an outer surface of the window glass. It may be understood that the window glass, the cover plate 300 and the outer sealing lip 130 form a flush type of door, which may not only make the door more beautiful, but also reduce air resistance of the door. Furthermore, the collapse trend of the outer sealing lip 130 is limited by the abutment force between the first abutment structure 151 and the second abutment structure 531, which enables the outer sealing lip 130 to form the flush type of door more reliably.

In some embodiments, with reference to FIG. 7 and FIG. 10, the connection member 51 includes a first connection member 511 and a second connection member 512. The first connection member 511 is configured to fixedly connect the guide rail member 40 to the door frame 30. The second connection member 512 is configured to fixedly connect the outer trim panel 500 to the door frame 30. A part of the door frame 30 connected to the first connection member 511 is fixed relative to a part of the door frame 30 connected to the second connection member 512, so that relative position between the outer trim panel 500 and the guide rail member 40 is kept fixed; furthermore, a possibility of assembly interference during assembly may be reduced by connecting two connection members to the outer trim panel 500 and the guide rail member 40 respectively, so that difficulty of assembly is reduced. Optionally, as shown in FIG. 10, the part of the door frame 30 connected to the first connection member 511 and the part of the door frame 30 connected to the second connection member 512 are obtained by integrated manufacture, that is, a greater structural strength is present between the part of the door frame connected to the first connection member 511 and the part of the door frame connected to the second connection member 512 by an integrated structure, so that relative movement between the outer trim panel 500 and the guide rail member 40 may be further limited, and relative position between the outer trim panel 500 and the guide rail member 40 may be kept fixed more reliably. It should be noted that the first connection member 511 is any structure capable of limiting relative movement between the guide rail member 40 and the door frame 30. Exemplarily, the first connection member 511 may be a structure such as a connection bolt, a positioning pin or the like; optionally, the first connection member 511 may be a separate component, or may be a structure integrally molded with the guide rail member 40. The second connection member 512 is any structure capable of limiting relative movement between the outer trim panel 500 and the door frame 30. Exemplarily, the second connection member 512 may be a structure such as a connection bolt, a positioning pin or the like; optionally, the second connection member 512 may be a separate component, or may be a structure integrally molded with the outer trim panel 500.

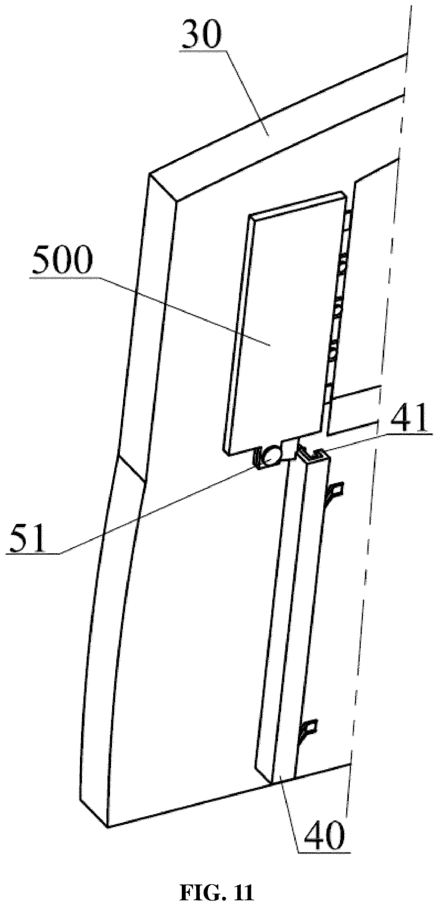

In some embodiments, as shown in FIG. 11, the connection member 51 is configured to connect the guide rail member 40 to the outer trim panel 500, and configured to fixedly connect the guide rail member 40 and the outer trim panel 500 to the door frame 30. It may be understood that there is at least one connection member 51 to fixedly connect the guide rail member 40 and the outer trim panel 500 to the door frame 30 simultaneously, and to fix the guide rail member 40 and the outer trim panel 500 at the same position of the door frame 30, so that a common fixation point of the guide rail member 40 and the outer trim panel 500 is formed, and the common fixation point may fix relative position between the guide rail member 40 and the outer trim panel 500 at a position where the first guide rail groove 141 and the second guide rail groove 141 may be communicated with each other and transit smoothly. It should be noted that the connection member 51 is any structure capable of limiting relative movement between the guide rail member 40, the outer trim panel 500 and the door frame 30. Exemplarily, the connection member 51 may be a structure such as a connection bolt, a positioning pin or the like; optionally, the connection member 51 may be a separate component, or may be a structure integrally molded with the outer trim panel 500 or the guide rail member 40.

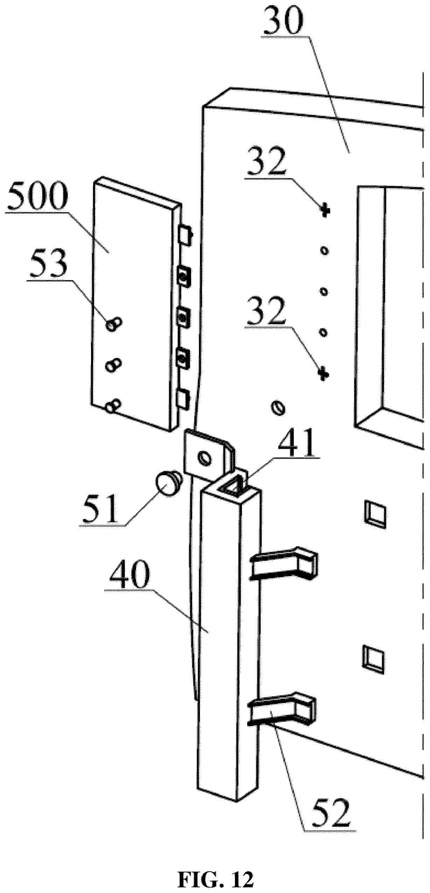

In some embodiments, as shown in FIG. 12, the door further includes a third connection member 52 and a fourth connection member 53. The third connection member 52 is configured to fixedly connect the guide rail member 40 to the door frame 30. The fourth connection member 53 is configured to fixedly connect the outer trim panel 500 to the door frame 30. It may be understood that besides fixing the guide rail member 40 and the outer trim panel 500 to a part without relative movement of the door frame 30 by the connection member 51, the third connection member 52 and the fourth connection member 53 are provided for auxiliary fixation of the guide rail member 40 and the outer trim panel 500 respectively, to limit relative movement between the guide rail member 40 and the door frame 30 and relative movement between the outer trim panel 500 and the door frame respectively, thereby further limiting relative movement between the guide rail member 40 and the outer trim panel 500.

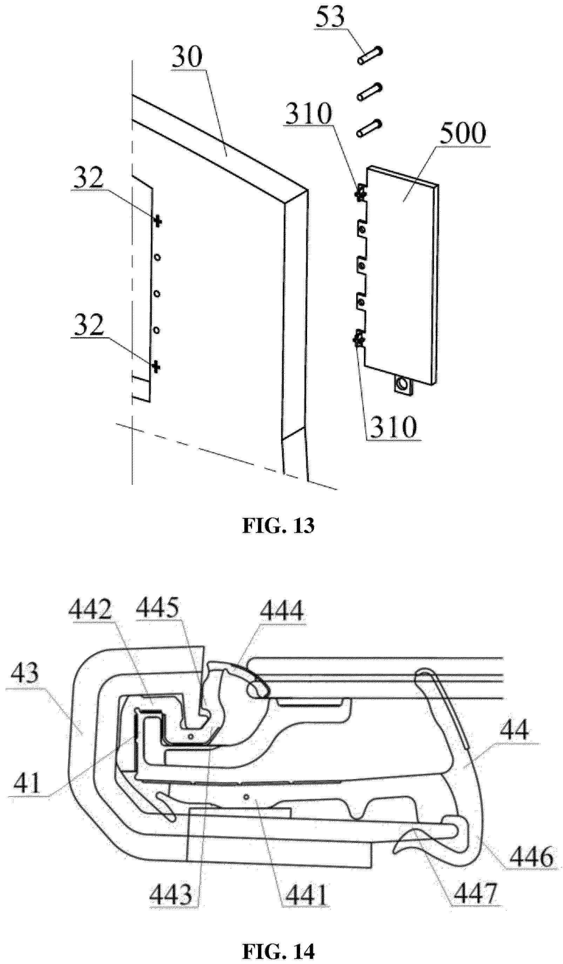

In some embodiments, with reference to FIG. 12 and FIG. 13, the outer trim panel 500 is provided with multiple first positioning structures 310 arranged at intervals. The door frame 30 is provided with second positioning structures 32 configured to abut against the first positioning structures 310 respectively. Positioning of the outer trim panel 500 relative to the door frame 30 may be achieved by abutting the first positioning structure 310 against the second positioning structure 32, and thus positioning between the glass run seal 100 and the guide rail member 40 is achieved. After the positioning completes, the first guide rail groove 141 of the glass run seal 100 smoothly transits to the second guide rail groove 41 of the guide rail member 40. It may be understood that at a position where the first guide rail groove 141 is communicated with the second guide rail groove 41, the extension direction of the first guide rail groove 141 is the same as that of the second guide rail groove 41, so that the guide member 400 may smoothly move between the first guide rail groove 141 and the second guide rail groove 41, and thus the window glass 20 is liftable smoothly. Multiple second positioning structures 32 arranged at intervals may also limit rotational movement of the outer trim panel 500 relative to the door frame 30.

In some embodiments, as shown in FIG. 12, the guide rail member 40 includes a lower retainer 43 and a lower sealing member 44. The lower sealing member 44 includes a lower sealing body 441, a lower guide rail component 442, a lower abutment component 443, and a lower outer sealing lip 444. The lower guide rail component 442 is fixed to an end of the sealing body 441, and bent to form the second guide rail groove 41. The lower outer sealing lip 444 is configured to seal a gap between the window glass 20 and the lower retainer 43. The lower abutment component 443 connects the lower guide rail component 442 to the lower outer sealing lip 444, the lower abutment component 443 is fixedly connected to another end of the lower guide rail component 442 opposite to an end thereof connected to the lower sealing body 441, and another end of the lower abutment component 443 is fixedly connected to the lower outer sealing lip 444. The lower retainer 43 is provided with a fifth abutment structure 431, the lower abutment component 442 is provided with a sixth abutment structure 445 configured to abut against the fifth abutment structure 431, and in a state where the fifth abutment structure 431 abuts against the sixth abutment structure 445, an abutment force between the fifth abutment structure 431 and the sixth abutment structure 445 is pointed to the outer surface of the window glass 20, to support the lower outer sealing lip 444 and limit a collapse trend of the lower outer sealing lip 444. Furthermore, the guide rail member 40 further includes a lower connection component 446, the lower connection component 446 is provided with a lower connection groove 447, a part of the lower retainer 43 is inserted into the lower connection groove 447, to reduce abnormal noise caused by impact of the lower sealing member 44 to the door frame 30 in a process of opening and closing the door, through relative movement between the lower retainer 43 and the door frame 30.

An embodiment of the application further provides a vehicle, the vehicle may be any vehicle with a door, and the door is provided with a movable window glass. The vehicle includes a body, and the door as shown in any one of FIG. 10 to FIG. 12. The body is provided with a door opening, and the door is movably connected to the body, to open or cover the door opening by movement of the door relative to the body.

The above descriptions are only preferred embodiments of the application, and are not intended to limit the scope of protection of the application.

## Claims

1. An outer trim panel (500), configured to abut against a glass run seal (100), **characterized in that** the glass run seal (100) is provided with an outer sealing lip (130) and a first abutment structure (151); the outer trim panel (500) is provided with a second abutment structure (531), and the second abutment structure (531) is configured to abut against the first abutment structure (151), and configured to apply an acting force facing toward the outer sealing lip (130) to the first abutment structure (151).

2. The outer trim panel (500) of claim 1, wherein the first abutment structure (151) is a first abutment groove (151A) formed by recessing a surface of the glass run seal (100), the second abutment structure (531) is a first abutment boss (531A) protruded from a surface of the outer trim panel (500), and the first abutment boss (531A) abuts against an inner wall of the first abutment groove (151A),
or,
the first abutment structure (151) is a second abutment boss (151B) protruded from a surface of the glass run seal (100), the second abutment structure (531) is a second abutment groove (531B) formed by recessing a surface of the outer trim panel (500) facing toward the outer sealing lip (130), and the second abutment boss (151B) abuts against an inner wall of the second abutment groove (531B).

3. The outer trim panel (500) of claim 1 or 2, wherein the outer trim panel (500) comprises:
a fixation component (520);
a second abutment component (530), protruded from a surface of the fixation component (520), a surface of the second abutment component (530) facing toward the outer sealing lip (130) being provided with the second abutment structure (531); and
a reinforcement component (540), a part of the reinforcement component (540) connected to the fixation component (520), and another part of the reinforcement component (540) connected to the second abutment component (530).

4. A profile assembly (501), configured to abut against a glass run seal (100), wherein the glass run seal (100) is provided with an outer sealing lip (130) and a first abutment structure (151); the profile assembly (501) is provided with a third abutment structure (502), and the third abutment structure (502) is configured to abut against the first abutment structure (151), and configured to apply an acting force facing toward the outer sealing lip (130) to the first abutment structure (151).

5. A glass run seal (100), **characterized in that** the glass run seal (100) comprises:
a sealing body (110);
a first abutment component (150), connected to the sealing body (110); and
an outer sealing lip (130), fixedly connected to an end of the first abutment component (150),
wherein the first abutment component (150) is provided with a first abutment structure (151).

6. The glass run seal (100) of claim 5, wherein the glass run seal (100) further comprises:
a first sealing component (120), located at an end of the sealing body (110), and provided with a first sealing groove (121),
wherein the first sealing groove (121) is provided with at least two inner sealing walls (122), the two inner sealing walls (122) are arranged opposite to each other, and a distance between the two inner sealing walls (122) decreases in a direction from an opening of the first sealing groove (121) to interior of the first sealing groove (121).

7. The glass run seal (100) of claim 6, wherein one of the inner sealing walls (122) is a planar surface, another of the inner sealing walls (122) is a curved surface, and the curved surface is protruded toward the planar surface.

8. The glass run seal (100) of claim 6, wherein each of the two inner sealing walls (122) is a planar surface, and the two inner sealing walls (122) form a preset included angle there-between.

9. The glass run seal (100) of any one of claims 5 to 8, wherein the first sealing component (120) comprises:
a connection component (123), fixedly connected to the sealing body (110);
a protrusion component (124), protruded from a surface of the connection component (123); and
an elastic arm (125), an end of the elastic arm (125) fixed to an end of the connection component (123), another end of the elastic arm (125) extended out of the connection component (123) to form a free end, and the free end and an outer surface of the protrusion component (124) forming the two inner sealing walls (122).

10. A sealing system assembly (10) of a window glass (20), **characterized in that** the sealing system assembly (10) comprises:
a cover plate (300), arranged at an interval from the window glass (20);
a guide member (400), fixed to an inner surface of the window glass (20);
the outer trim panel (500) of any one of claims 1 to 3, fixed to an inner surface of the cover plate (300); and
the glass run seal (100) of any one of claims 5 to 9, the outer sealing lip (130) located between the cover plate (300) and the window glass (20), and blocking a gap between the cover plate (300) and the window glass (20); or, a part of the outer trim panel (500) extending to a side of the cover plate (300) close to the window glass (20), and the outer sealing lip (130) located between the part of the outer trim panel (500) extended to the side of the cover plate (300) close to the window glass (20) and the window glass (20), and blocking a gap between the part and the window glass (20),
wherein the glass run seal (100) further comprises a guide rail component (140), the guide rail component (140) connects the first abutment component (150) to the sealing body (110), and is bent to form a first guide rail groove (141), and an inner wall of the first guide rail groove (141) is configured to abut against at least a part of the guide member (400),
the second abutment structure (531) abuts against the first abutment structure (151), and is configured to apply an acting force facing toward an outer surface of the window glass (20) to the outer sealing lip (130).

11. The sealing system assembly (10) of claim 10, wherein at least a part of the outer sealing lip (130) is in the same plane as an outer surface of the cover plate (300), and the outer surface of the outer sealing lip (130) is in the same plane as the outer surface of the window glass (20), in a state where the window glass (20) is mounted in the sealing system assembly (10).

12. The sealing system assembly (10) of claim 10, wherein the outer sealing lip (130) is provided with a third abutment groove (131), and the cover plate (300) abuts against an inner wall of the third abutment groove (131).

13. The sealing system assembly (10) of claim 10, wherein the sealing system assembly (10) further comprises:
a sheet metal member (200), at least a part of the sheet metal member (200) located in a first sealing groove (121) of the glass run seal (100).

14. The sealing system assembly (10) of claim 13, wherein the sealing system assembly (10) further comprises a window frame trim panel (600), wherein the glass run seal (100) is further provided with a second sealing groove (126), the second sealing groove (126) is located between the sealing body (110) and the first sealing groove (121), and a part of the window frame trim panel (600) is located in the second sealing groove (126).

15. The sealing system assembly (10) of claim 14, wherein the first sealing groove (121) is opened in a direction opposite to the second sealing groove (126).

16. A sealing system assembly (10) of a window glass (20), **characterized in that** the sealing system assembly (10) comprises:
the profile assembly (501) of claim 4, arranged at an interval from the window glass (20);
a guide member (400), fixed to an inner surface of the window glass (20); and
the glass run seal (100) of any one of claims 5 to 9, the outer sealing lip (130) located between the profile assembly (501) and the window glass (20), and blocking a gap between the profile assembly (501) and the window glass (20),
wherein the glass run seal (100) further comprises a guide rail component (140), the guide rail component (140) connects the first abutment component (150) to the sealing body (110), and is bent to form a first guide rail groove (141), and an inner wall of the first guide rail groove (141) is configured to abut against at least a part of the guide member (400),
the third abutment structure (502) abuts against the first abutment structure (151), and is configured to apply an acting force facing toward an outer surface of the window glass (20) to the outer sealing lip (130).

17. The sealing system assembly (10) of claim 16, wherein at least a part of the outer sealing lip (130) is in the same plane as an outer surface of the profile assembly (501), and the outer surface of the outer sealing lip (130) is in the same plane as the outer surface of the window glass (20), in a state where the window glass (20) is mounted in the sealing system assembly (10).

18. A door (1) of a vehicle, **characterized in that** the door (1) comprises:
a door frame (30), provided with a window opening;
a guide rail member (40), provided with a second guide rail groove (41) and fixedly connected to the door frame (30);
the sealing system assembly (10) of any one of claims 10 to 15, the outer trim panel (500) fixedly connected to the door frame (30); and
a window glass (20), an inner surface of the window glass (20) fixedly connected to the guide member (400), the guide member (400) configured to abut against an inner wall of the first guide rail groove (141) or an inner wall of the second guide rail groove (41), and the window glass (20) movable relative to the door frame (30) in an extension direction of the first guide rail groove (141) and an extension direction of the second guide rail groove (41), and opening or covering at least a part of the window opening,
wherein the outer trim panel (500) is provided with a limit component (550), the limit component (550) abuts against a part of the guide rail component (140) connected to the sealing body (110), and abuts against the sealing body (110), and a preset included angle is present between an extension direction of the part of the guide rail component (140) connected to the sealing body (110) and an extension direction of the sealing body (110),
the door (1) further comprises a connection member (51), the connection member (51) is configured to fix the guide rail member (40) to the door frame (30), and configured to fix the outer trim panel (500) to the door frame (30).

19. The door (1) of claim 18, wherein the connection member (51) comprises:
a first connection member (511), configured to fixedly connect the guide rail member (40) to the door frame (30); and
a second connection member (512), configured to fixedly connect the outer trim panel (500) to the door frame (30),
wherein a part of the door frame (30) connected to the first connection member (511) is fixed relative to a part of the door frame (30) connected to the second connection member (512).

20. The door (1) of claim 19, wherein the part of the door frame (30) connected to the first connection member (511) and the part of the door frame (30) connected to the second connection member (512) are obtained by integrated manufacture.

21. The door of claim 18, wherein the connection member (51) is configured to connect the guide rail member (40) to the outer trim panel (500), and configured to fixedly connect the guide rail member (40) and the outer trim panel (500) to the door frame (30).

22. The door (1) of any one of claims 18 to 21, wherein the door (1) further comprises:
a third connection member (52), configured to fixedly connect the guide rail member (40) to the door frame (30); and
a fourth connection member (53), configured to fixedly connect the cover plate (300) to the door frame (30).

23. The door of claim 18, wherein the outer trim panel (500) is provided with a plurality of first positioning structures (310) arranged at intervals,
the door frame (30) is provided with second positioning structures (32) configured to abut against the first positioning structures (310) respectively, so that the first guide rail groove (141) is communicated with the second guide rail groove (41), and the first guide rail groove (141) smoothly transits to the second guide rail groove (41).

24. A door (1) of a vehicle, **characterized in that** the door (1) comprises:
a door frame (30), provided with a window opening;
a guide rail member (40), provided with a second guide rail groove (41) and fixedly connected to the door frame (30);
the sealing system assembly (10) of claims 16 to 17, the profile assembly (501) fixedly connected to the door frame (30); and
a window glass (20), an inner surface of the window glass (20) fixedly connected to the guide member (400), the guide member (400) configured to abut against an inner wall of the first guide rail groove (141) or an inner wall of the second guide rail groove (41), and the window glass (20) movable relative to the door frame (30) in an extension direction of the first guide rail groove (141) and an extension direction of the second guide rail groove (41), and opening or covering at least a part of the window opening,
wherein the profile assembly (501) is provided with a limit component (550), the limit component (550) abuts against a part of the guide rail component (140) connected to the sealing body (110), and abuts against the sealing body (110), and a preset included angle is present between an extension direction of the part of the guide rail component (140) connected to the sealing body(110) and an extension direction of the sealing body (110),
the door (1) further comprises a connection member (51), the connection member (51) is configured to fix the guide rail member (40) to the door frame (30), and configured to fix the profile assembly (501) to the door frame (30).
